# EUROPEAN PATENT SPECIFICATION

(11) **EP 3 322 952 B1**
(45) Date of publication and mention of the grant of the patent: **05.06.2019**
(21) Application number: 16716665.1
(22) Date of filing: 12.04.2016
(51) Int. Cl.: F24B 7/02, F24B 7/04, F26B 23/00, F26B 23/02, A24B 1/02

(54) **A HEATER FOR USE IN CURING TOBACCO OR FOR OTHER SIMILAR PROCESSES**
HEIZELEMENT ZUR VERWENDUNG BEI DER HÄRTUNG VON TABAK ODER ÄHNLICHEN VERFAHREN
DISPOSITIF DE CHAUFFAGE POUR UTILISATION DANS LE SÉCHAGE DU TABAC OU POUR D'AUTRES TRAITEMENTS SIMILAIRES

(30) Priority: 15.07.2015 GB 201512343
(43) Date of publication of application: 23.05.2018
(73) Proprietor: British American Tobacco (Investments) Ltd, London WC2R 3LA (GB)
(72) Inventor: BERGER, Irving Joseph, 20091-020 Rio de Janeiro - RJ (BR); MILAK, Valdir, 20091-020 Rio de Janeiro - RJ (BR); SCREMIN, Jeronimo, 20091-020 Rio de Janeiro - RJ (BR); RITT, Daniel Augusto, 20091-020 Rio de Janeiro - RJ (BR); OLIVEIRA, Vando Braz de, 20091-020 Rio de Janeiro - RJ (BR); MARTINS, Paula Fabiane, 20091-020 Rio de Janeiro - RJ (BR)
(74) Representative: D Young & Co LLP
(86) International application number: PCT/GB2016/051020
(87) International publication number: WO 2017/009594

(56) References cited:
- BR-A- 8 201 451
- CN-U- 203 216 234
- GB-A- 1 271 485
- US-A- 4 212 634
- US-A- 4 482 315

## Description

### Field

The present disclosure relates to a heater which may be used for curing tobacco or for another similar process, such as drying various plant materials.

### Background

The post-harvest processing of tobacco leaves usually includes a step of curing to remove moisture from the tobacco leaves and to achieve desired attributes of sensorial quality. As part of the curing process, the tobacco leaves are typically located on (or suspended from) racks in a barn. Included in the barn is a heating compartment, which includes a fan, heat exchanger and a furnace. The fan is used to move air from the barn into the heating compartment, where the air is heated by the furnace and heat exchanger, and then returned into the main area of the barn. An example of such a barn use for tobacco curing is disclosed in BR 8201451A.

In such a system, hot air (typically ranging from 30-80°C) from the furnace leaves the heating compartment and enters the barn. In the barn, the hot air causes moisture to evaporate from the tobacco leaves, as part of the curing process, whereby the air is cooled somewhat by the evaporated moisture. The cooled air is then drawn back into the heating compartment to be re-heated by the furnace.

The air is therefore re-circulated between the heating compartment and the barn housing the tobacco to be cured. This re-circulation helps to improve the efficiency of the curing process, since the cooled air returning from the barn into the heating compartment is still generally warmer than the ambient (external) air temperature. Accordingly, it requires less input of energy to heat the re-circulated air to the desired temperature for curing than it would to heat external air to this temperature.

In many implementations, the furnace uses wood burning as its fuel source. In such a system (and also for other types of furnace), it is important to ensure that the recirculating air is not contaminated by smoke arising from the combustion of wood in the furnace, since such contamination could potentially impact the curing of the tobacco.

US 4482315 discloses an auxiliary wood furnace for a bulk curing tobacco barn which is arranged for installation in a basement immediately below a conventional oil or gas fired furnace for ease of barn modification and adaptation to burning wood as the source of heat.

### Summary

The invention is defined in the appended claims.

Some embodiments provide a heater for use in curing tobacco or other similar process, the heater comprising: a furnace having a chamber in which to burn fuel to generate heat; and a heat exchanger for transferring heat from the heater to an airflow for use in curing the tobacco or other similar process. The airflow passes outside the heater. The heat exchanger has one or more pipes that connect into the chamber of the furnace and is integrated into the furnace.

Some embodiments provide a heater for use in curing tobacco or other similar process. The heater comprises a furnace having a chamber in which to burn fuel to generate heat; and a heat exchanger for transferring heat from the heater to an airflow for use in curing the tobacco or other similar process, wherein the airflow passes outside the heater. The heat exchanger has a plurality of pipes that connect into the chamber of the furnace, wherein the plurality of pipes comprises two rows of pipes, one on each side of the furnace. The heat exchanger further including a plenum, wherein each of the pipes leads upwards from the furnace chamber to the plenum.

The heat exchanger may be integrated into the furnace by the use of one or more welded junctions or any other alternative sealing methods or materials. Sealing the junction or joints in the heater (e.g. body of the furnace, plenum, exchanger junctions, pipe walls, etc.) helps to prevent smoke leakage.

### Brief Description of the Drawings

Various embodiments of the invention will now be described in detail by way of example only with reference to the following drawings:
Figure 1 is a schematic diagram of the use of a heater in a tobacco curing process in accordance with some embodiments of the invention.
Figure 2 is a schematic overview of a heater for use in the tobacco curing process of Figure 1 in accordance with some embodiments of the invention.
Figure 3 is a top view of the heater of Figure 2 in accordance with some embodiments of the invention.
Figure 4 is a front view of the heater of Figure 2 in accordance with some embodiments of the invention.
Figure 5 is a side view of the heater of Figure 2 in accordance with some embodiments of the invention.
Figure 6 is a schematic section through the heater of Figure 2, from the same side as the view of Figure 5, to illustrate cleaning process in accordance with some embodiments of the invention.
Figure 7 is a diagram illustrating the reduced contamination of a leaf that results from using the heater of Figures 2-6 compared with using a conventional heat exchanger in accordance with some embodiments of the invention.

### Detailed Description

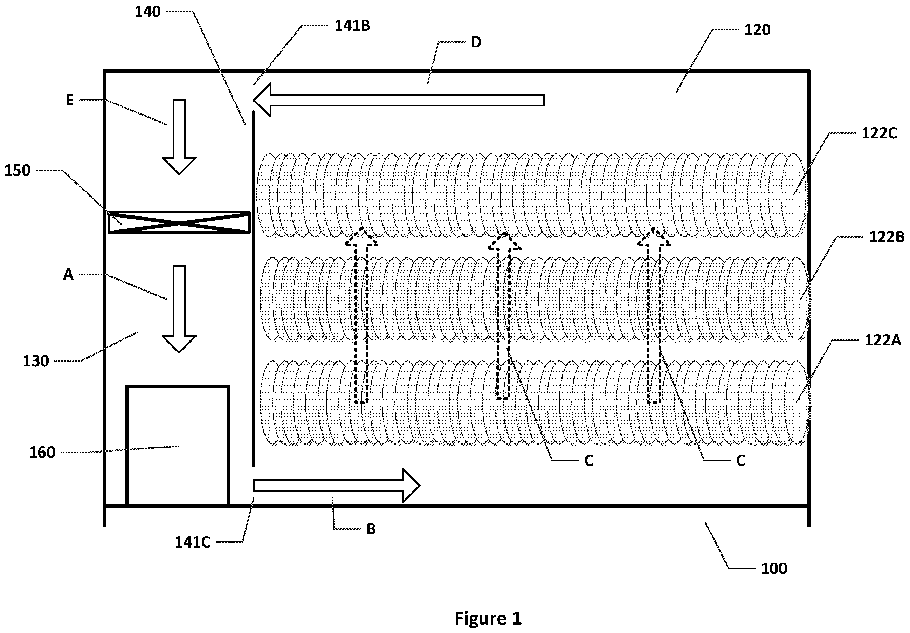

Figure 1 is a schematic drawing of a tobacco curing process in accordance with some embodiments of the invention. The tobacco curing process is performed within a barn 100 which is divided by wall 140 into a main drying chamber 120 and a heating compartment 130. Located within the heating compartment are a fan 150 and a heater 160. Located within the drying chamber are multiple racks of tobacco leaves to be cured 122A, 122B, 122C.

In operation, the fan 150 is used to re-circulate air within the barn 100. In particular, the fan pushes air within the heating compartment 130 towards and past the heater 160, as indicated by arrow A, such that heat is transferred from the heater to the airflow. This produces a heated airflow which travels through a suitable opening 141C in a lower portion of the dividing wall 140 into the lower portion of the drying chamber 120, as indicated by arrow B. The heated air now rises and percolates through the racks of tobacco 122A, 122B and 122C, as indicated by arrows C (shown in broken line to indicate that this airflow may be intermingled with the racks of tobacco 122A, 122B and 122C). This procedure causes the airflow represented by arrows C to draw out moisture from the tobacco, which results in a slight cooling of the airflow, plus a drying of the tobacco.

Once the airflow has reached the upper portion of the drying chamber 120, the airflow travels back into the heating compartment 130 through a suitable opening 141B in an upper portion of the dividing wall 140, as indicated by arrow D. The airflow is then drawn into the fan 150, as indicated by arrow E, and another cycle then starts as the air re-circulates within barn 100.

It will be appreciated that Figure 1 is schematic, and there may be variations from one implementation to another, for example regarding the number and/or configuration of tobacco racks within the heating chamber 120, the construction and arrangement of the heating compartment within (or adjacent to) the barn 100, etc.

In addition, the barn 100 may also have the ability to vent a portion of the re-circulating air if the moisture content within the air becomes very high (or saturated), since this makes the air less effective at drawing moisture out from the tobacco leaves. As hot, very moist, air is vented out of the barn 100, cooler, less moist air may be drawn into the barn as a replacement. This newly introduced air then has to be heated up to the operating temperature of the interior of the barn for curing the tobacco leaves. (Note that for simplicity, the outlet to vent air out of barn 100 and the inlet to introduce external air into the barn 100 are omitted from Figure 1).

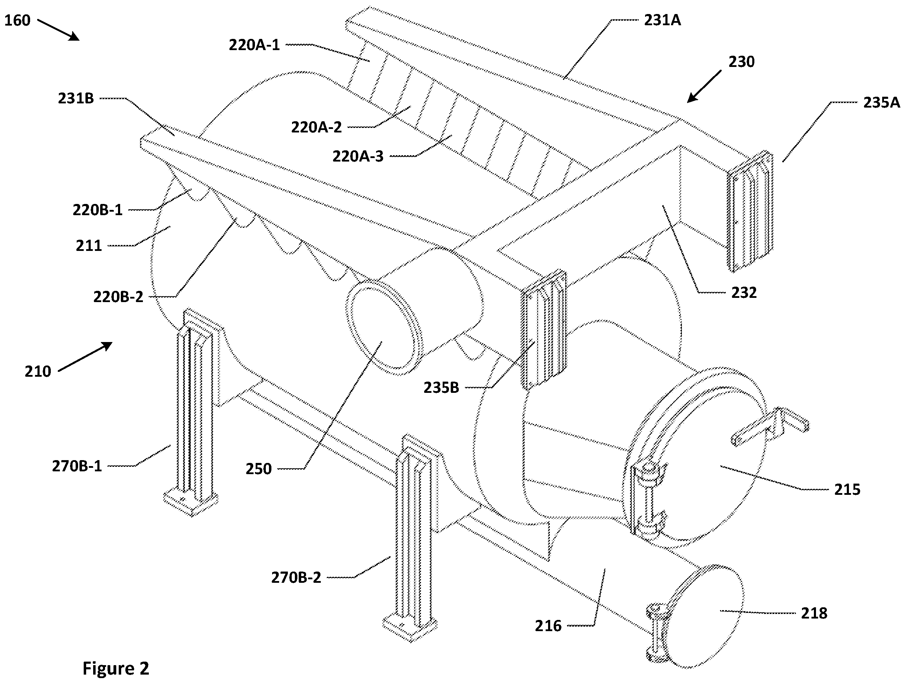

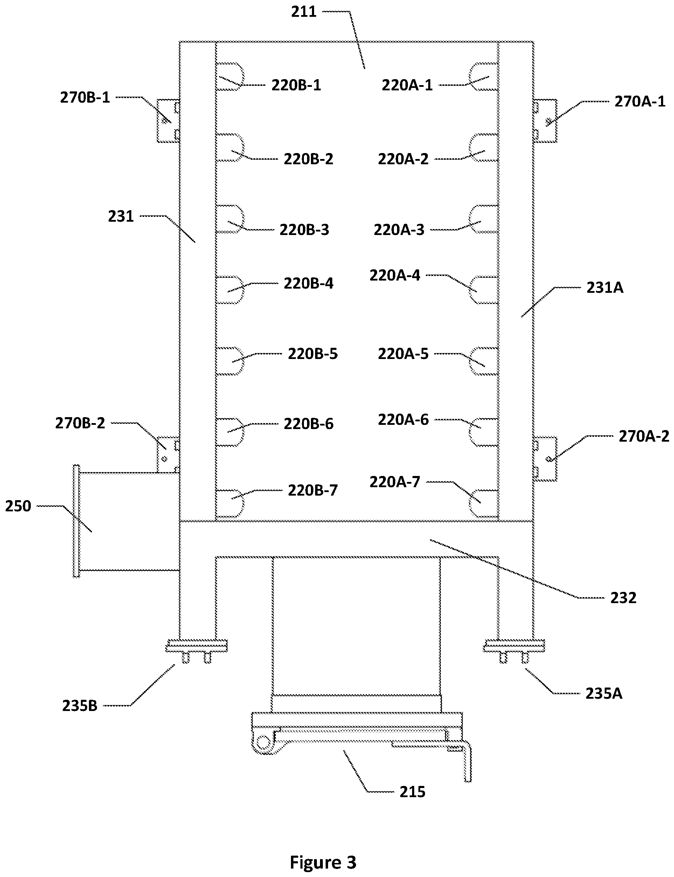

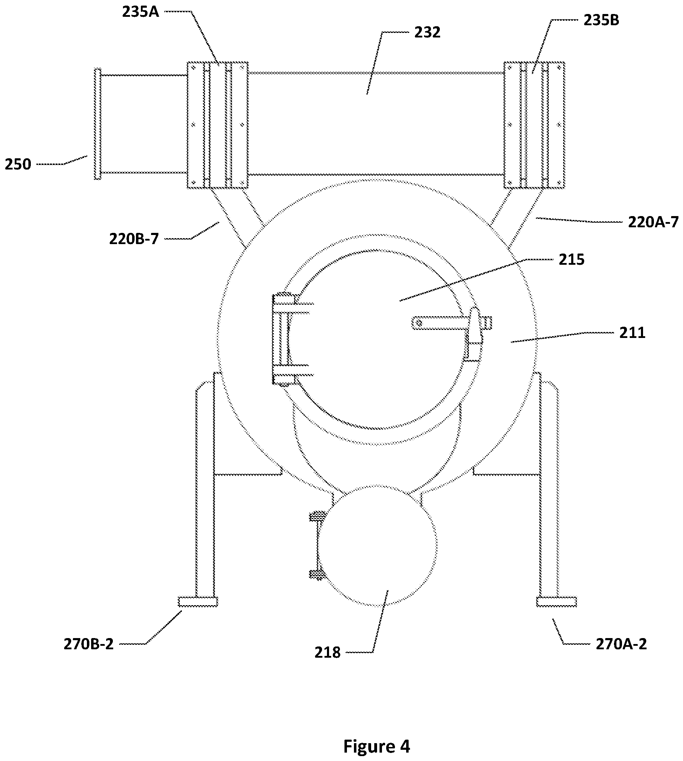

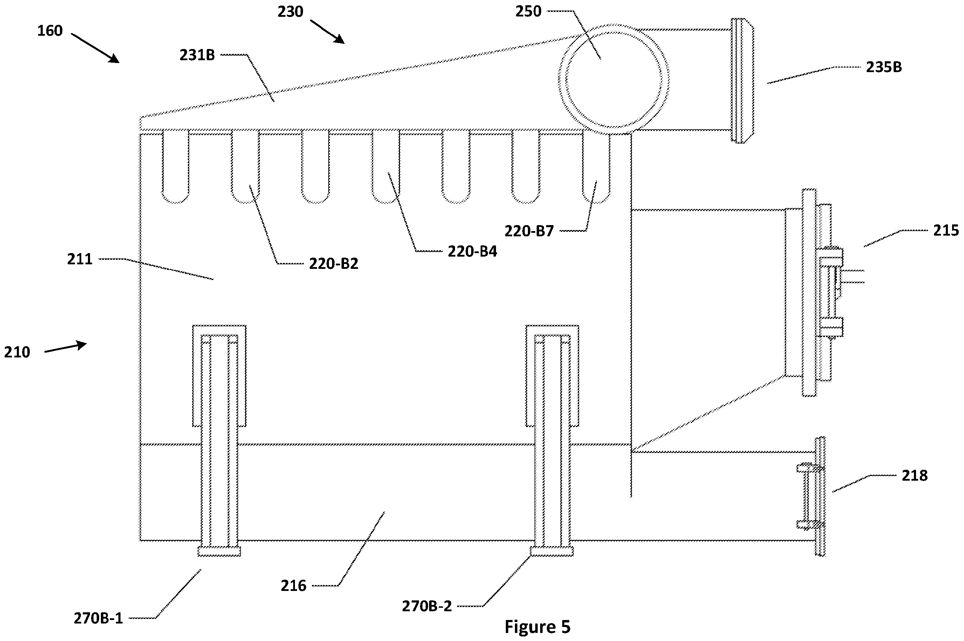

Figures 2-5 illustrate the heater 160 of Figure 1 in more detail. In particular, Figure 2 is a schematic overview of the heater 160 in accordance with some embodiments of the invention; Figure 3 is a top view of the heater of Figure 2 in accordance with some embodiments of the invention; Figure 4 is a front view of the heater of Figure 2 in accordance with some embodiments of the invention; and Figure 5 is a side view of the heater of Figure 2 in accordance with some embodiments of the invention.

The heater 160 of Figures 2-5 has two primary functions. Firstly, the heater 160 acts as a stove or furnace to burn fuel to provide a heat source. Secondly, the heater 160 acts as a (gas-to-gas) heat exchanger to help provide an efficient transfer of heat from the furnace into the circulating airflow shown in Figure 1, thereby helping to raise or maintain the temperature inside the barn 100 as required for the curing process.

As shown in Figures 2-5, the heater 160 includes a furnace or stove 210 and a heat exchanger located on top of the furnace. The furnace 210 (and hence the overall heater 160) is supported by four legs 270, two on each side, see e.g. legs 270B-1 and 270B-2 in Figure 2. These legs 270 may be fastened to the floor of the barn 100, for example, by screws, to retain the furnace securely in position.

The furnace includes a chamber 211 in which fuel, e.g. wood, is combusted to produce heat. The chamber has a generally cylindrical shape, where the central axis of the cylindrical shape lies approximately horizontal. At one end of the chamber (referred to herein as the front), as determined in a direction parallel to the central axis of the cylindrical shape, is a door 215. This door can be opened to allow fuel to be entered into the chamber 211.

The residue, e.g. ash, of fuel which is burnt in the chamber 211 falls into an ashtray 216 located underneath the furnace chamber 211. The ashtray also has a generally cylindrical shape, where the central axis of the cylindrical shape of the ashtray lies approximately horizontal, substantially parallel to the cylindrical axis of the chamber 211. The length of the ashtray (as measured along the cylindrical axis) corresponds approximately to the length of the chamber (also as measured along the cylindrical axis), in other words, the chamber and the ashtray are approximately co-extensive with one another.

The ashtray 216 is provided with a door 218 which can be used for removing ash from the ashtray. This door 218 of the ashtray is located approximately underneath the door 215 to the chamber 211. This configuration allows for easier access and configuration - e.g., ensuring that the heater 160 can be accessed from the front allows both fuel to be entered into the chamber 211 via door 215, and also ash to be removed from the ashtray 216 via door 218.

The legs 270 support the chamber 211 such that the ash-tray 216 is held on or above the floor of the barn. The latter arrangement may be helpful, for example, to allow enhanced air circulation around the heater, and also to prevent the ashtray 216, when hot, from overheating the floor of the barn.

The heat exchanger includes two rows of pipes, 220A-1, 220A-2, 220A-3 and 220B-1, 220B-2, etc., one row on each side of the heater 160, and a hot air plenum 230. The hot air plenum has a configuration approximately in the form of an "H" arranged horizontally and is formed of two parallel (opposing) arms 231A, 231B joined by a cross-piece 232, where the arms extend in a direction parallel to the main cylindrical axis of the heater 160. The pipes in both rows are uniformly sized and shaped, with a substantially circular cross-section.

Each row of pipes 220A, 220B extends upwards from the chamber 211 to a respective arm 231A, 231B of the plenum 230. In this way, the pipes provide a path for hot air to rise out of the furnace 210 and pass into the plenum 230. There is one row of pipes on each side of the furnace 210, and each row extends outwards (i.e. away from the other row and from the centre of the heater) at an angle of approximately 30 degrees to the vertical. Within each row 220A, 220B, the pipes are horizontally spaced, in a direction substantially parallel to the main cylindrical axis of the heater 160.

The spacing between successive pipes, e.g. 220A-1, 220A-2, in a row is approximately equal to the width (diameter) of an individual pipe, so that the upper surface of a row of pipes, in the plane defined by the pipes themselves, has approximately equal portions of (i) the pipes themselves, and (ii) the spacings or gaps between the pipes.

Heated gases are able to leave the plenum 230 via an exhaust tube 250, which forms in effect an extension of the cross-piece 232 that bridges the two arms 231A, 231B of the plenum. In the implementation of Figures 2-5, the exhaust tube is on the side of the plenum corresponding to arm 231B, hence the cross-piece 232 provides a route for hot air to leave from the opposing arm 231A out through the exhaust tube 250. Both arms of the plenum extend beyond the cross-piece 232 towards the front of the heater 160, i.e. in the same direction as the furnace door 215 and the ashtray door 218. The front end of each arm of the plenum 231A, 231B is fitted with a respective window, 235A, 235B, to allow an operator to monitor the internal operation of the heater 160 and/or to support pipe cleaning within the furnace. Having these windows 235A, 235B presented in the same direction as both the furnace door 215 and the ashtray door 218 again helps in terms of ease of access to the heater 160 for operating and maintenance purposes.

As an approximate indication of scale, the heater 160 has a total height of approximately 1.5m, comprising approximately 0.35m for the ashtray 216, 0.35m for the plenum 230, and 0.8m for the furnace 210. Each row of pipes 220A, 220B comprises 7 pipes, each of diameter approximately 0.1 m. However, it will be appreciated that these dimensions are indicative only, and will vary from one implementation to another, depending upon the size of the barn for heating, plus many other parameters.

The ashtray is also provided with a small fan that connects to a pipe which leads outside the barn (this small fan and pipe are omitted for simplicity from the Figures). The fan draws in external air through the pipe, and this external air then passes firstly into the ashtray 216, and from there into the furnace chamber 211. Note that there is relatively little risk of leaking combustion products via this air inlet, since this would require the leaking gas to flow against the pressure differential (and incoming air stream) created by the fan.

In operation, the gaseous/vapour combustion products (and hot air) from the furnace pass up through the pipes 220 into the plenum, and from there into the exhaust 250. More particularly, the exhaust, like the air inlet into the ashtray, is connected via a pipe, chimney, or some other form of vent (not shown in the Figures) to the outside of the barn, hence the hot gas and vapours are vented outside rather than into the interior of the barn. Note that the location of the exhaust vent should be at a significant distance from any external air intake to provide air for recirculation within the barn (e.g. to replace air that has become saturated with moisture). One way of helping to achieve this is to have the exhaust pipe 250 connected to a chimney of sufficient height that the exhaust gases are dispersed or dissipated over a very wide area (and away from any air inlet).

The air used for curing the tobacco generally re-circulates within the interior of the barn, as indicated by arrows A, B, C, D and E in Figure 1. This re-circulation of air is driven by fan 150, which draws air out of the main drying chamber 120, and into the heating compartment 130. The heating compartment is sized, e.g. by suitable placement of the dividing wall 140, so that the airflow indicated by arrow A in Figure 1 is forced to pass relatively close to the heater 160. This helps to ensure that heat is transferred efficiently from the furnace 210 into the (re)circulating airflow, which in turn heats (cures) the tobacco in the main heating compartment 130.

It will be appreciated that the heat exchanger, in particular the rows 220A, 220B of pipes, is configured to help the efficiency of this heat transfer. For example, the sloping angle of the pipes 220 (i.e. away from the vertical) provides a high surface area target for the re-circulating air as it is pushed downwards by the re-circulating fan 150, as indicated by arrow A in Figure 1. In effect, this higher surface area supports increased heat transfer between the pipes 220 and the re-circulating air. In addition, the spacing between the pipes 220 in a given row allows the re-circulating air still greater access to the outer surface of these pipes, since the re-circulating air is able to pass through the gaps or spacing between the pipes 220 in a given row 220A, 220B. In other words, the re-circulating air is able to pass across and between the pipes, which helps to increase the overall efficiency of the heat exchanger.

The heater 160 of Figures 2-5 therefore holds the heat exchanger above the furnace 210 as a single unit or body, without junctions or joins. The furnace 210 creates a flow of hot gases inside tubes 220 of the heat exchanger, which are arranged in two opposing rows 220A, 220B. The tubes 220 connect the furnace 210 to the plenum 230 to help ensure uniformity of heat over the surface of the heat exchanger as presented to the airflow from fan 150.

For a typical barn arrangement, for example as illustrated in the above-mentioned patent BR8201451A, the heater 160 is located in a front area of the barn 100, in the substantially the same location as the ventilation system, i.e. fan 150. In particular, the heater 160 is sited just below the ventilator 150. This helps to concentrate body of the furnace 210 and the pipes 220 of the heat exchanger in a region where the air flow maximizes heat transfer. This configuration is supported by a uniform distribution of the pipes in each row of pipes 220A, 220B, which helps to ensure an even gas flow in the heat exchanger (and hence a more even heating of the airflow past the heat exchanger).

As noted above, in barns that use firewood fuel for curing tobacco, there is a risk of smoke leaking into the barn through cracks or holes in the pipes or furnace, or through incorrect installation of pipes. Such leakage may potentially contaminate the tobacco leaves, which can decreases leaf quality in the barn, and may also interfere with sensory attributes of the tobacco, and so represents a loss of some of the qualitative characteristics of the tobacco. However, the heater 160 described herein has a one-piece (integrated) design that provides a furnace 210 which is joined to (integrated with) the heat exchanger by means of welded junctions. Such a construction helps to minimise the chance of leaks from connections between the furnace and the heat exchanger. Accordingly, the heater 160 offers an effective way to improve tobacco quality, whilst retaining the ability to use an energy resource (firewood) which is currently adopted in a considerable number of countries.

As described herein, the heater 160 acts as a gas-to-gas heat exchanger linked to the furnace 210. The heat exchanger is located above the furnace and includes two sets or rows of pipes 220A, 220B, one on each side of the furnace 210. Both sets of pipes are connected to the hot air plenum 230, which in turn leads to an exhaust facility 250.

Having the pipes 220A, 220B arranged in an inclined manner, i.e. between horizontal and vertical, helps heated gas to rise out of the furnace 210 through the pipes 220A, 200B and into the plenum, while at the same time offering a good surface area for heat transfer to air which flows around the heater 160. In addition, the inclined orientation of the pipes 220A, 220B also helps to prevent ash deposit in the pipes. This configuration of furnace and heater is formed with welded joints, e.g. between the pipes 220 and the heating chamber 211 and the plenum 230 to prevent the leakage of smoke. This helps to ensure that combustion products from the furnace 210 do not escape from the heater 160 into the recirculating air within the barn drying compartment 120, since such leakage might potentially contaminate or degrade the tobacco during the curing process.

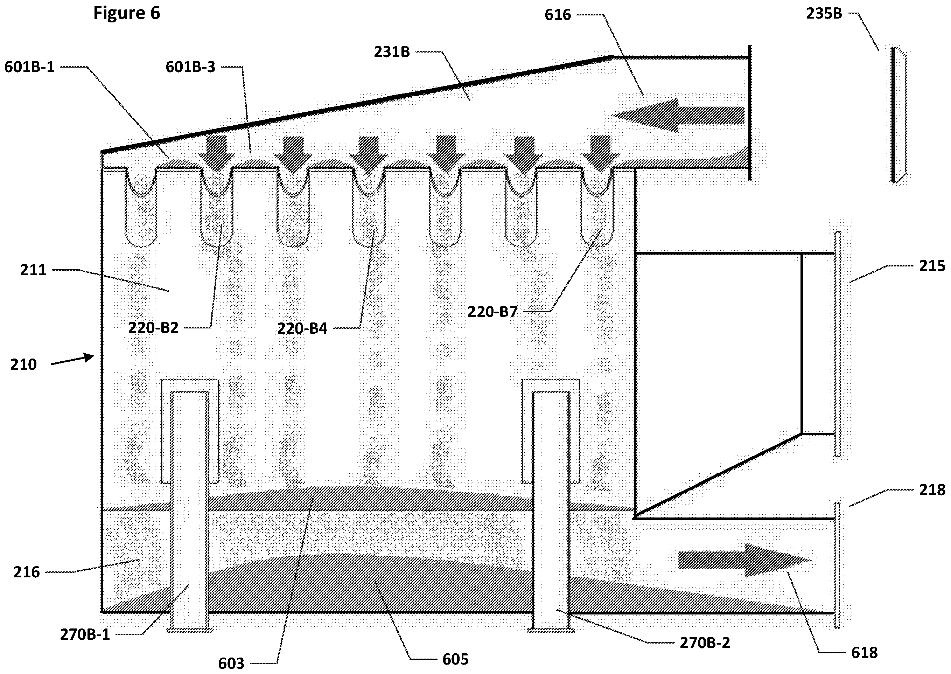

The inclined configuration of the pipes 220 is also arranged to help avoid ash deposit and to facilitate cleaning, as illustrated in Figure 6. In particular, Figure 6 is a schematic section through the heater of Figure 2, from the same side as the view of Figure 5, in accordance with some embodiments of the invention (note that for clarity, the exhaust 250 is omitted from Figure 6).

Figure 6 illustrates that small piles 601B-1, 601B-3, and so on, of ash and other similar deposits may accumulate in the arms of the plenum 231A, 231B. These piles are limited in size, because if they become too large, the ash falls off the sides of the pile back down one of the tubes 220B, thereby returning to the furnace chamber 211.

Figure 6 illustrates a further pile 603 of ash and/or similar residues on the floor of the furnace chamber 211. Note that the floor of the furnace chamber may be formed of a grid, grating, or similar structure, which supports the unburnt fuel (such as wood) within the combustion chamber, but also allows the ash and/or similar residues to fall through into the ashtray 216. The pile of ash, etc 605 in the ashtray 216 at the bottom of the furnace 210 may be removed as desired through the ashtray door 218. This passage of ash out of the plenum 230 and the furnace chamber 211 into ashtray 216 may be regarded as a form of passive cleaning.

In order to facilitate active cleaning, the windows 235A and 235B at the front of respective arms 231A, 231B of the plenum 230 are removable, as shown in Figure 6. This provides an opening into each arm for air to be blown, as indicated by arrow 616 (and also provides for the insertion of any desired cleaning tool). This airflow indicated by arrow 616 passes along the plenum 231A, 231B, down through the holes 220 into the furnace chamber 211. The airflow therefore carries ash from the plenum down into the furnace chamber 211, and then through the floor of the furnace chamber into the ashtray 216. Finally, the accumulated ash in pile 605 may be removed from the ashtray via door 218 (when opened), as indicated by arrow 618. Note that this arrangement helps to convey ash, which may be located in piles 601B-1, 601B-3, etc, 603 or 605, towards, and finally out through, the door 218, thereby cleaning the interior of the heater 160.

Accordingly, front windows 235 allow both inspection and also easy cleaning. As shown in Figure 6, for such cleaning (both active and passive), especially for cleaning the pipes 220, there is no need to disassemble the pipes (hence these can be welded between the furnace 210 and the plenum 230). Enabling such cleaning to be performed with the pipes still *in situ* helps to preserve the pipes joints from potential damage during any disassembly, which might otherwise be required for the cleaning. As before, this helps to avoid leaks from the heater that might otherwise possibly contaminate the tobacco leaves that are being cured. Furthermore, the active and passive cleaning, by providing an effective route for ash and other residues to exit the furnace 211, can also help to improve fuel efficiency of the furnace 210 and the heat exchanger.

While the construction and operation of heater 160 as described above can lead to reductions in contamination of the tobacco leaves in the barn 100, it is also sensible to complement these actions with other measures to help prevent the entry of smoke through a vent to the barn 100. Accordingly, appropriate filters may be installed into any such vents, ventilators, ducts or other air circulation systems involved in the curing barn 100 in order to further reduce any potential contamination.

A further factor in reducing any contamination is furnace management during the tobacco curing process. Thus opening the door 215 of the furnace chamber for re-stocking with fuel may potentially release smoke into the environment, which in turn may possibly get into the barn through the vents. The heater 160 can therefore be operated using an automatic stocking system (not shown in the Figures), which can help to reduce the number of times the furnace door 215 is opened during the curing process. Such an automatic stocking system again helps to reduce any smoke leakage, while also offering the possibility of improved fuel efficiency.

The heater described herein therefore provides an improved design for a combined furnace and heat exchanger that helps to offer, inter alia, an increase in the quality of the cured tobacco (less contamination), just one exhaust pipe for easy connection to a chimney or other external vent, and a reduction in firewood consumption. Furthermore, cleaning is facilitated because an inspection window provides full access to the interior of the heat exchanger, so that the pipes 220 and other components of the heat exchanger do not need to be disassembled for cleaning. In addition, the ash deposits in the heat exchanger are decreased by reducing the number of horizontal pipes; in particular, pipes 220 generally avoid ash deposits by virtue of their significant inclination away from the horizontal.

The heater 160 reduces the number of junctions between pipes compared to a conventional furnace and heat exchanger used in tobacco flue-curing barns. In particular, there are no (internal) connections to be made at installation between the furnace 210 and the heat exchanger (unlike for conventional systems), and the only external connection or junction for heater 160 is to connect the exhaust 250 to or through an external vent. (There may also be a connection for the air inlet into the ashtray, but as noted above, this has minimal risk of leakage, because it can be configured solely for flow into the heater 160).

In some implementations, the cross-bar 232 of the plenum may extend sufficiently to allow the exhaust pipe 250 (as welded to the heater 160) to pass into a separate compartment or room, or directly to an external vent. In this case, any junction or seal around the end of the exhaust pipe 250 may be located outside, and separated from, the recirculating airflow. Such a configuration may help to further reduce the risk of any leakage of combustion products into the recirculating airflow.

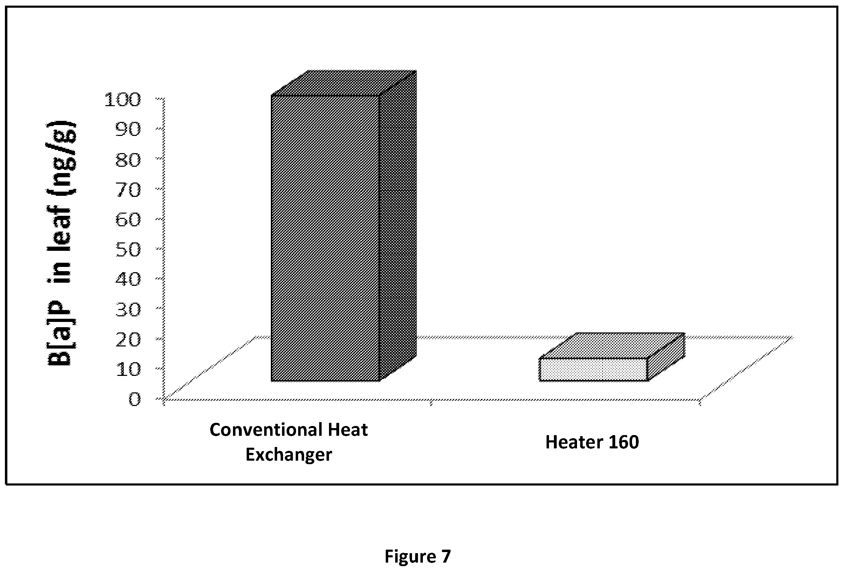

Figure 7 shows some experimental results obtained when curing tobacco using a heater 160 such as shown in Figures 2-6 in accordance with some embodiments of the invention. In particular, Figure 7 illustrates the level of leaf contamination B[a]P (Benzo[a]pyrene) resulting from the tobacco curing process when using (a) a typical conventional heat exchanger (left hand column), and (b) a heater 160 such as shown in Figures 2-6 (right hand column). This level of B[a]P can be used as general indicator of smoke contamination on the tobacco cured leaf. As can be seen from Figure 7, the use of the heater 160 described herein can lead to a very significant reduction (e.g. up to 90%) of B[a]P compared to the levels of B[a]P found in tobacco cured in barns with a conventional heat exchanger.

Although the above description has focussed on certain embodiments of the heater 160, the skilled person will be aware of various potential modifications, enhancements, simplifications, etc, according to the circumstances of any given implementation. For example, the configuration and connectivity of the plenum may be modified as appropriate (e.g. not necessarily an H-shape, different numbers and/or layout of pipes, etc). In addition, the furnace 210 might use a different heat (combustion) source rather than wood, such as liquid petroleum gas (LPG), coal, biomass, etc. In addition, the heater may include a different type of heat exchanger, for example, gas-to-liquid, depending upon how the heat is to be transferred from the furnace to the material to be heated. In addition, other techniques to help reduce or minimise smoke leakage may also be employed by the modification of the described heater 160 or applied to the conventional systems already commercially available, such as pipes junctions with flanges and clamps (e.g. for the exhaust 250), single continuous piece pipe (no junctions, e.g. original junctions welded) for heat exchanger and/or the use of sealing materials at such junctions, e.g. synthetic polymers as used in the vehicle industry.

The heater described herein can be used to dry or cure different plant parts and/or food (not just tobacco) - e.g. grains and tea. Furthermore, although heater 160 as described above is formed from metal with welded junctions, other implementations may also utilise (at least in part) other materials, such as brick or concrete. Furthermore, the welded junctions may be replaced (at least in part) with other junctions that provide an appropriate level of sealing, e.g. by using junctions between pipes and the furnace and/or the plenum, wherein the junctions are provided with flanges and/or clamps (etc.) to obtain the requisite level of sealing at the junctions.

In conclusion, in order to address various issues and advance the art, this disclosure shows by way of illustration various embodiments in which the claimed invention(s) may be practiced. The advantages and features of the disclosure are of a representative sample of embodiments only, and are not exhaustive and/or exclusive. They are presented only to assist in understanding and to teach the claimed invention(s). It is to be understood that advantages, embodiments, examples, functions, features, structures, and/or other aspects of the disclosure are not to be considered limitations on the disclosure as defined by the claims or limitations on equivalents to the claims, and that other embodiments may be utilised and modifications may be made without departing from the scope of the claims. Various embodiments may suitably comprise, consist of, or consist essentially of, various combinations of the disclosed elements, components, features, parts, steps, means, etc other than those specifically described herein.

## Claims

1. A heater (160) for use in curing tobacco or other similar processes, the heater comprising:
a furnace (210) having a chamber (211) in which to burn fuel to generate heat; and
a heat exchanger for transferring heat from the heater to an airflow for use in curing the tobacco or other similar process, wherein the airflow passes outside the heater, the heat exchanger having a plurality of pipes (220) that connect into the chamber of the furnace, wherein the plurality of pipes comprises two rows of pipes (220A, 220B), each row comprising multiple pipes (220A-1, 220A-2), one row on each side of the furnace, the heat exchanger further including a plenum (230), wherein each of the pipes leads upwards from a respective welded connection with the furnace chamber to the plenum, and wherein for each row, the pipes therein are spaced from one another to allow the airflow passing outside the heater to flow between the pipes;
an exhaust tube (250) connected to the plenum to allow the gaseous/vapour combustion products to pass from the furnace, through the pipes (220) into the plenum and from there into the exhaust (250).

2. The heater of any preceding claim, wherein the number of pipes in said plurality of pipes is in the range 6 to 24.

3. The heater of claim 2, in which the number of pipes in said plurality of pipes is in the range 10 to 20.

4. The heater of any preceding claim, wherein the pipes are inclined away from the vertical.

5. The heater of any preceding claim, wherein the pipes in the first row all have a first inclination to the vertical, and the pipes in the second row all have a second inclination to the vertical.

6. The heater of claim 5, wherein the first inclination is equal and opposite to the second inclination, such that the first and second rows diverge upwards away from one another.

7. The heater of claim 5 or 6, wherein the pipes are inclined at an angle in the range 10 to 60 degrees away from the vertical.

8. The heater of claim 7, wherein the pipes are inclined at an angle in the range 20 to 40 degrees away from the vertical.

9. The heater of any preceding claim, wherein the spacing between the pipes is approximately uniform and the same in size as the diameter of the pipes.

10. The heater of any preceding claim, wherein each pipe has a welded junction at the upper end to the plenum.

11. The heater of any preceding claim, wherein the plenum provides a shared path from each of the plurality of pipes to an exhaust pipe.

12. The heater of any preceding claim, wherein the plenum has a substantially H-shaped configuration comprising first and second arms (231A, 231B) which are respectively connected to first and second rows of the pipes, and a bridge portion (232) which crosses between the first and second arms.

13. The heater of any preceding claim, wherein the plenum includes at least one inspection window (235A, 235B) to provide access into the plenum.

14. The heater of any preceding claim, wherein the heater is configured to help prevent leakage of combustion products from the furnace chamber into said airflow for use in curing the tobacco or other similar processes.

15. A method of using the heater (160) of any preceding claim to cure tobacco, the method comprising:
providing a barn (100) comprising a heating compartment (130) divided by a wall (140) from a drying chamber (120), the heater being located in the heating compartment, and tobacco to be cured being located in the drying chamber;
producing a heated airflow by pushing air within the heating compartment towards and past the heater, such that heat is transferred from the heater to the airflow; and
passing the heated airflow from the heating compartment into the drying chamber to percolate through and cure the tobacco;
wherein producing a heated airflow includes, for each row of pipes in the heater, having the airflow pass through the spacings between the pipes.

## Patentansprüche

1. Heizelement (160) zur Verwendung bei der Trocknung von Tabak oder ähnlichen Verfahren, wobei das Heizelement Folgendes umfasst:
einen Ofen (210), der eine Kammer (211) aufweist, in der Brennstoff verbrannt wird, um Wärme zu erzeugen; und
einen Wärmetauscher, um Wärme von dem Heizelement zu einem Luftstrom zur Verwendung bei der Trocknung von Tabak oder ähnlichen Verfahren zu übertragen, wobei der Luftstrom außen an dem Heizelement vorbeiströmt, wobei der Wärmetauscher mehrere Rohre (220) aufweist, die in die Kammer des Ofens laufen, wobei die mehreren Rohre zwei Rohrreihen (220A, 220B) umfassen, wobei jede Reihe mehrere Rohre (220A-1, 220A-2) umfasst, wobei sich auf jeder Seite des Ofens eine Reihe befindet, wobei der Wärmetauscher ferner einen Verteiler (230) einschließt, wobei jedes der Rohre von einer entsprechenden Schweißverbindung mit der Ofenkammer zu dem Verteiler nach oben führt, und wobei die Rohre in jeder Reihe voneinander beabstandet sind, um es dem Luftstrom, der außen an dem Heizelement vorbeiströmt, zu ermöglichen, zwischen die Rohre zu strömen;
ein Abgasrohr (250), das mit dem Verteiler verbunden ist, um es den gasförmigen/dampfförmigen Verbrennungsprodukten zu ermöglichen, von dem Ofen durch die Rohre (220) in den Verteiler und von dort in das Abgasrohr (250) zu strömen.

2. Heizelement nach einem der vorstehenden Ansprüche, wobei die Anzahl der mehreren Rohre im Bereich von 6 bis 24 liegt.

3. Heizelement nach Anspruch 2, wobei die Anzahl der mehreren Rohre im Bereich von 10 bis 20 liegt.

4. Heizelement nach einem der vorstehenden Ansprüche, wobei die Rohre von der Vertikalen weg geneigt sind.

5. Heizelement nach einem der vorstehenden Ansprüche, wobei die Rohre in der ersten Reihe eine erste Neigung zur Vertikalen aufweisen und die Rohre in der zweiten Reihe eine zweite Neigung zur Vertikalen aufweisen.

6. Heizelement nach Anspruch 5, wobei die erste Neigung gleich der zweiten Neigung und ihr entgegengesetzt ist, sodass die erste und zweite Reihe nach oben auseinanderlaufen.

7. Heizelement nach Anspruch 5 oder 6, wobei die Rohre in einem Winkel im Bereich von 10 bis 60 Grad von der Vertikalen weg geneigt sind.

8. Heizelement nach Anspruch 7, wobei die Rohre in einem Winkel im Bereich von 20 bis 40 Grad von der Vertikalen weg geneigt sind.

9. Heizelement nach einem der vorstehenden Ansprüche, wobei der Abstand zwischen den Rohren in etwa gleichmäßig ist und dem Durchmesser der Rohre entspricht.

10. Heizelement nach einem der vorstehenden Ansprüche, wobei jedes Rohr am oberen Ende eine Schweißverbindung zum Verteiler aufweist.

11. Heizelement nach einem der vorstehenden Ansprüche, wobei der Verteiler einen gemeinsamen Weg von jedem der mehreren Rohre zu einem Abgasrohr bereitstellt.

12. Heizelement nach einem der vorstehenden Ansprüche, wobei der Verteiler im Wesentlichen H-förmig ist und einen ersten und zweiten Arm (231A, 231B), die mit der ersten bzw. zweiten Rohrreihe verbunden sind, und einen Brückenabschnitt (232) umfasst, der quer zwischen dem ersten und zweiten Arm verläuft.

13. Heizelement nach einem der vorstehenden Ansprüche, wobei der Verteiler mindestens ein Sichtfenster (235A, 235B) einschließt, um Zugang zu dem Verteiler bereitzustellen.

14. Heizelement nach einem der vorstehenden Ansprüche, wobei das Heizelement dazu ausgelegt ist, das Austreten von Verbrennungsprodukten aus der Ofenkammer in den Luftstrom zur Verwendung bei der Trocknung von Tabak oder ähnlichen Verfahren zu verhindern.

15. Verfahren zum Verwenden des Heizelements (160) nach einem der vorstehenden Ansprüche, um Tabak zu trocknen, wobei das Verfahren Folgendes umfasst:
Bereitstellen eines Schuppens (100), der einen Heizabschnitt (130) umfasst, der durch eine Wand (140) von einer Trockenkammer (120) getrennt ist, wobei sich das Heizelement in dem Heizabschnitt befindet und sich der zu trocknende Tabak in der Trockenkammer befindet;
Erzeugen eines erwärmten Luftstroms durch Drücken von Luft in dem Heizabschnitt in Richtung des Heizelements und an diesem vorbei, sodass Wärme von dem Heizelement auf den Luftstrom übertragen wird; und
Leiten des erwärmten Luftstroms von dem Heizabschnitt in die Trockenkammer, um in den Tabak einzudringen und ihn zu trocknen;
wobei das Erzeugen eines erwärmten Luftstroms für jede Rohrreihe in dem Heizelement einschließt, dass der Luftstrom durch die Zwischenräume zwischen den Rohren geleitet wird.

## Revendications

1. Dispositif de chauffage (160) à utiliser pour faire sécher du tabac ou dans d'autres traitements similaires, le dispositif de chauffage comprenant:
un four (210) comprenant une chambre (211) dans laquelle un combustible est brûlé pour générer de la chaleur; et
un échangeur de chaleur pour transférer de la chaleur du dispositif de chauffage à un écoulement d'air à utiliser pour faire sécher du tabac ou dans d'autres traitements similaires, dans lequel l'écoulement d'air passe à l'extérieur du dispositif de chauffage, l'échangeur de chaleur comprenant une pluralité de tuyaux (200) qui se connectent dans la chambre du four, dans lequel la pluralité de tuyaux comprend deux rangées de tuyaux (220A, 220B), chaque rangée comprenant de multiples tuyaux (220A-1, 220A-2), une rangée de chaque côté du four, l'échangeur de chaleur comprenant en outre un plénum (230), dans lequel chacun des tuyaux s'étend vers le haut à partir d'une connexion soudée respective avec la chambre de four jusqu'au plénum, et dans lequel, pour chaque rangée, les tuyaux dans celles-ci sont espacés les uns des autres de manière à permettre à l'écoulement d'air de passer à l'extérieur du dispositif de chauffage afin de s'écouler entre les tuyaux; et
un tube d'échappement (250) connecté au plénum afin de permettre aux produits de combustion de gaz/vapeur de passer du four, à travers les tuyaux (220), dans le plénum et de là dans le tuyau d'échappement (250).

2. Dispositif de chauffage selon l'une quelconque des revendications précédentes, dans lequel le nombre de tuyaux dans ladite pluralité de tuyaux est compris dans la gamme de 6 à 24.

3. Dispositif de chauffage selon la revendication 2, dans laquelle le nombre de tuyaux dans ladite pluralité de tuyaux est compris dans la gamme 10 à 20.

4. Dispositif de chauffage selon l'une quelconque des revendications précédentes, dans lequel les tuyaux sont inclinés par rapport à la verticale.

5. Dispositif de chauffage selon l'une quelconque des revendications précédentes, dans lequel les tuyaux dans la première rangée présentent tous une première inclinaison par rapport à la verticale, et les tuyaux dans la seconde rangée présentent tous une seconde inclinaison par rapport à la verticale.

6. Dispositif de chauffage selon la revendication 5, dans lequel la première inclinaison est égale et opposée à la seconde inclinaison, de telle sorte que les première et seconde rangées divergent vers le haut à l'écart l'une de l'autre.

7. Dispositif de chauffage selon l'une quelconque des revendications 5 à 6, dans lequel les tuyaux sont inclinés d'un angle compris dans la gamme 10° à 60° par rapport à la verticale.

8. Dispositif de chauffage selon la revendication 7, dans lequel les tuyaux sont inclinés d'un angle compris dans la gamme de 20° à 40° par rapport à la verticale.

9. Dispositif de chauffage selon l'une quelconque des revendications précédentes, dans lequel l'espacement entre les tuyaux est approximativement uniforme, et pareillement s'agissant de la taille et du diamètre des tuyaux.

10. Dispositif de chauffage selon l'une quelconque des revendications précédentes, dans lequel chaque tuyau présente une jonction soudée au niveau de l'extrémité inférieure au plénum.

11. Dispositif de chauffage selon l'une quelconque des revendications précédentes, dans lequel le plénum procure un chemin partagé à partir de chacun de la pluralité de tuyaux jusqu'à un tuyau d'échappement.

12. Dispositif de chauffage selon l'une quelconque des revendications précédentes, dans lequel le plénum présente une configuration sensiblement en forme de H présentant un premier et un second bras (231A, 231B) qui sont respectivement connectés à la première et la seconde rangées de tuyaux, et une partie de pont (232) qui s'étend entre les premier et second bras.

13. Dispositif de chauffage selon l'une quelconque des revendications précédentes, dans lequel le plénum comprend au moins une fenêtre d'inspection (235A, 235B) pour offrir un accès dans le plénum.

14. Dispositif de chauffage selon l'une quelconque des revendications précédentes, dans lequel le dispositif de chauffage est configuré de manière à aider à empêcher toute fuite de produits de combustion hors de la chambre de four dans ledit écoulement air à utiliser pour faire sécher le tabac ou dans d'autres traitements similaires.

15. Procédé d'utilisation d'un dispositif de chauffage (160) selon l'une quelconque des revendications précédentes pour faire sécher du tabac, le procédé comprenant les étapes suivantes:
fournir une grange (100) comprenant un compartiment de chauffage (130) séparé d'une chambre de séchage (120) par une paroi (140), le dispositif de chauffage étant situé dans le compartiment de chauffage, et du tabac à faire sécher étant disposé dans la chambre de séchage;
produire un écoulement d'air chauffé en poussant de l'air à l'intérieur du compartiment de chauffage en direction et au-delà du dispositif de chauffage, de telle sorte que de la chaleur soit transférée du dispositif de chauffage à l'écoulement d'air; et
faire passer l'écoulement d'air chauffé du compartiment de chauffage dans la chambre de séchage afin qu'il percole à travers et sèche le tabac;
dans lequel la production d'un écoulement d'air chauffé comprend, pour chaque rangée de tuyaux dans le dispositif de chauffage, le passage de l'écoulement d'air à travers les espacements entre les tuyaux.
